# FASCICULE DE BREVET EUROPEEN

(11) **EP 0 694 872 B1**
(45) Date de publication et mention de la délivrance du brevet: **06.06.2001**
(21) Numéro de dépôt: 95401743.0
(22) Date de dépôt: 24.07.1995
(51) Int. Cl.: G06K 19/077, A44C 21/00

(54) **Jeton de jeu perfectionné**
Verbesserte Spielmarke
Improved gaming chip

(30) Priorité: 26.07.1994 FR 9409212
(43) Date de publication de la demande: 31.01.1996
(73) Titulaire: ETABLISSEMENTS BOURGOGNE ET GRASSET, F-21420 Savigny les Beaune (FR)
(72) Inventeur: Boiron, Dominique, F-21200 Beaune (FR)
(74) Mandataire: Poidatz, Emmanuel

(56) Documents cités:
- EP-A- 0 376 062
- EP-A- 0 436 497
- EP-A- 0 564 051
- EP-A- 0 570 784
- EP-A- 0 646 893
- WO-A-92/21105
- DE-U- 8 909 783
- DE-U- 9 300 173
- FR-A- 2 663 145
- US-A- 4 511 796

## Description

La présente invention concerne des jetons de jeu également appelés jetons de casino. Par jeton de jeu, on entend tout élément utilisable en salle de jeux et représentant une valeur nominale, prédéterminée ou non, en général en forme de disque parfois susceptible de représenté un enjeu élevé. Ces jetons sont classés en deux familles selon le type de jeux pour lesquels ils sont utilisés, jetons "français ou européens" avec valeur prédéterminée et jetons "américains" avec ou sans valeur prédéterminée.

D'une façon générale, les jetons sont fabriqués en matière plastique rigide et résistante aux rayures. Les jetons présentent des motifs variés en dessin et en couleurs pour réduire les risques de falsification et/ou de reproductions frauduleuses.

Avec l'amélioration des techniques de reproduction et l'augmentation régulière des enjeux associés aux jetons, la seule complexité du dessin et des couleurs s'avère insuffisante aujourd'hui pour combattre efficacement les reproductions frauduleuses. Par ailleurs, outre la lutte contre la fraude et le vol, les exploitants de casino recherchent à améliorer et à faciliter la gestion de leurs tables de jeu, en particulier pour réaliser un inventaire en continu de la valeur en jeu sur une table et/ou pour suivre la valeur l'apport brut sur une table et/ou suivre la trace de jetons particulièrement importants. Ainsi il a déjà été proposé dans le document EP-A-0436497 un jeton de jeu selon le préambule de la revendication 1 dans lequel un dispositif d'identification électronique est disposé dans le corps du jeton. En particulier le document EP-A-0436497 décrit un jeton de jeu dans lequel le dispositif d'identification électronique, comportant circuit électronique et émetteur-récepteur équipé de son antenne et enrobé dans la résine époxy est monté au centre d'un disque annulaire de bronze formant lest lui-même disposé dans l'ouverture centrale du corps du jeton. La décoration faciale du jeton est réalisée par l'intermédiaire d'étiquettes décoratives en matière plastique recouvrant le disque de bronze et le dispositif d'identification électronique. Ces étiquettes faciales adhésives sont disposées de part et d'autre du disque de bronze et juste insérées en périphérie dans le bord de l'ouverture centrale du corps du jeton. Toutefois ces étiquettes réalisées à partir de feuilles plastiques minces et montées sur le jeton dans un but décoratif ne sont pas en mesure d'assurer au dispositif d'identification électronique une protection latérale efficace contre les intrusions frauduleuses, par exemple à l'aide d'un outil coupant, en vue de la substitution ou de la falsification l'identifiant électronique sans pour autant toucher au corps du jeton.

La demande EP-A-0646893 citée dans le cadre de l'article 54(3) CBE décrit un jeton de paiement électronique anti-fraude utilisable notamment dans les machines à sous et comprenant un corps annulaire en métal présentant une ouverture centrale dans laquelle est disposé un dispositif d'identification électronique enrobé dans de la résine époxy, l'ouverture étant fermée par deux flasques en matière plastique collées au corps.

L'invention a pour objet de proposer un jeton de jeu à dispositif d'identification électronique (également appelé identifiant) bien adapté aux contraintes rigoureuses résultant de la nature même d'un jeton de jeu.

En effet certains jetons de jeu étant susceptibles d'avoir une valeur nominale élevée, il importe d'assurer la fixation permanente entre le jeton et son identifiant résistant notamment aux intrusions frauduleuses. En d'autres termes le jeton doit présenter une structure telle que l'accès à l'identifiant ne puisse pas être obtenu sans la destruction complète du corps du jeton interdisant ainsi toute falsification ou substitution de l'identifiant.

Par ailleurs les jetons de jeu ont une durée de vie assez longue (estimée aujourd'hui à cinq ans) au cours de laquelle ils sont soumis à des conditions d'exploitation difficiles (manipulations permanentes, passage à la machine à laver, etc ). Il importe également que l'identifiant soit bien protégé tant pendant le stade de la fabrication du jeton que pendant la période d'exploitation.

L'invention propose un jeton de jeu, ou un dispositif analogue représentatif d'une valeur nominale prédéterminée ou non, selon la revendication 1. Selon l'invention le jeton de jeu, ou un dispositif de jeu analogue représentatif d'une valeur nominale prédéterminée ou non, comportant un corps plat en matière plastique pourvu d'une ouverture traversant ledit corps, un disque central formant lest dans ladite ouverture et porteur d'un dispositif d'identification électronique et une couronne annulaire en matière plastique surmoulée sur le disque central formant ledit corps du jeton, est caractérisé en ce que le disque central est constitué par une coque rigide en matière plastique à l'intérieur de laquelle est disposé le dispositif d'identification électronique, la matière plastique utilisée pour la coque étant chargée en poids par des particules de métaux non ferreux tels que le tungstène ou le bronze et/ou par des particules de ferrite également destinée à améliorer les performances de transmission du dispositif d'identification électronique.

Ainsi la coque rigide intégrée à demeure dans le corps du jeton par l'opération de surmoulage assure une double fonction de protection physique du dispositif d'identification électronique, y compris son invisibilité dans la coque, et de garant de l'authenticité du jeton. En effet l'intégration à demeure de l'identifiant électronique au coeur du corps du jeton est telle qu'il est impossible de changer l'identifiant ou son boîtier sans détruire le jeton.

De plus l'utilisation pour la coque de matière plastique chargée en poids par des particules de métaux non ferreux tels que le tungstène ou le bronze et/ou de ferrite, supprime le besoin d'un lest en métal indépendant de la coque et dont la présence dans le jeton aurait pu nuire d'une part à l'intégration de la coque dans le corps lors du surmoulage et d'autre part à l'efficacité de l'antenne. On réalise ainsi de façon peu onéreuse le lest nécessaire au jeton avec un poids de lest approprié. De plus selon un mode de réalisation avantageux de l'invention la matière plastique utilisée pour la coque est chargée en poids par des particules de tungstène.

Il est à noter également que grâce à l'invention, chaque jeton peut de façon permanente être identifié dès sa fabrication, selon un code numérique ou alphanumérique donné par le fabricant et pratiquement infalsifiable. Le jeton peut alors être facilement authentifié par les utilisateurs (opérateurs des casinos) disposant d'un poste de lecture du code. Cette identification permanente du jeton améliore la sécurité et entre également dans le cadre de la lutte contre le vol de jetons. Bien entendu sans sortir du cadre de l'invention l'identification peut être complétée par d'autres information concernant le jeton, par exemple la valeur nominale du jeton, le code du casino et/ou de la table de jeu, etc.. . Les exploitants de casino ont ainsi la possibilité de suivre en instantané les valeurs en jeu table par table et même les déplacements des joueurs d'une table à une autre. Dans certains cas notamment pour les jetons de faible valeur, le code d'identification proprement dit, spécifique à un jeton donné, n'est pas nécessaire, la valeur du jeton et/ou le code du casino constituent l'information d'identification relative au jeton et conservée dans la mémoire du dispositif d'identification électronique.

Avantageusement, le dispositif d'identification électronique comporte un circuit électronique comportant une mémoire portant des informations concernant le jeton, par exemple un code d'identification, et un émetteur-récepteur à antenne périphérique adapté pour être alimenté par couplage inductif. De plus le dispositif d'identification électronique est disposé dans la coque rigide soit directement, soit encapsulé ou enrobé.

On obtient ainsi sous un faible volume un circuit assez simple et d'un coût relativement modeste. De plus la position périphérique de l'antenne permet d'augmenter l'efficacité de l'identifiant en émission-réception en utilisant au maximum le faible volume disponible dans l'ouverture au centre du jeton (environ 20 mm de diamètre notamment pour les jetons dits « américains » lestés) pour disposer l'identifiant tout en lui assurant une protection totale dans la coque rigide.

Selon une première variante du jeton de jeu selon l'invention la coque rigide est obtenue par solidarisation d'un couvercle en matière plastique sur un disque creux en matière plastique portant ledit dispositif d'identification électronique.

Selon d'autres variantes de réalisation du jeton selon l'invention, la coque est monobloc et obtenue par moulage par injection:
- Dans un premier cas la coque est obtenue par injection autour dudit dispositif d'identification électronique de matière plastique éventuellement chargée.
- Dans un second cas, la coque est obtenue par injection de matière plastique en surmoulage sur une demi-coque creuse en matière plastique portant le dispositif d'identification électronique.

On peut remarquer que les deux cas le moulage par injection assure une grande sécurité pour le jeton et une bonne protection pour le dispositif d'identification électronique.

Pour lutter contre le vol des jetons, le jeton selon l'invention comporte de plus des moyens détectables par portique de détection, fixés ou disposés dans le corps du jeton, du type à film orienté ou filament en matière active ou en alliage sensible au rayonnement électromagnétique.

On peut noter que dans toutes les variantes présentées ci-dessus, l'intégration à demeure de l'identifiant électronique au coeur du corps du jeton est telle qu'il est impossible de changer l'identifiant ou son boîtier sans détruire le jeton. Cette intégration assure également une bonne protection contre le risque de dégradation de l'identifiant lors des manipulations du jeton.

L'invention concerne également les procédés de fabrication des jetons présentés ci-avant.

D'autres caractéristiques et avantages de la présente invention apparaîtront à la lecture de la description qui va suivre d'un mode de réalisation préférentiel de l'invention et de ses variantes, donnés à titre d'exemples non limitatifs, en référence aux dessins ci-joints dans lesquels:
- la figure 1 représente une vue de face d'un jeton de jeu moulé par injection dit jeton "américain" selon la présente invention; et
- la figure 2 représente une vue en coupe diamétrale selon un plan perpendiculaire au jeton du jeton illustré à la figure 1.
- les figures 3a (vue de dessus) et 3b à 3d (vues en coupe diamétrale) illustrent schématiquement les diverses phases de fabrication d'un autre mode de réalisation d'un jeton "américain" du type illustré à la figure 1; et
- les figures 4a à 4b illustrent schématiquement la phase finale de fabrication d'encore un autre mode de réalisation d'un jeton "américain".

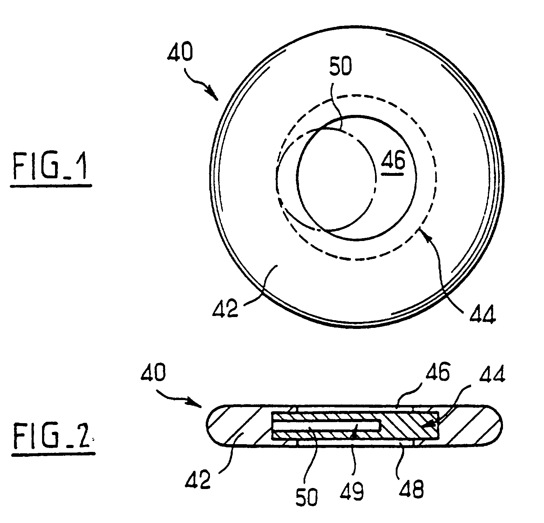

Les figures 1 et 2 se rapportent à un premier mode de réalisation de l'invention appliquée en particulier aux jetons à corps injecté par surmoulage de type jetons "américains". Dans ce type de jeton se présentant sous une forme générale de disque plat, le corps 40 est constitué d'une couronne annulaire 42 en matière plastique surmoulée sur un disque central 44 formant lest, la mise à niveau de chaque face du jeton étant assurée par des étiquettes 46 et 48 portant un décor et collées au disque 44 ou fixées par tout moyen convenable au jeton (voir en particulier la figure 2 montrant le jeton en coupe). La couronne 42 est de préférence réalisée en polyamide PA-6 ou PA-6.6 éventuellement chargée de baryte et peut faire l'objet d'injections successives de matières plastiques de couleurs différentes dans des empreintes de formes intermédiaires variées de façon à réaliser un décor multicolore (non représenté) dans la masse du corps du jeton.

Selon l'invention la coque rigide permettant l'intégration d'un dispositif d'identification électronique 49 avec son boîtier 50 porteur du circuit électronique d'identification et de l'antenne est confondue avec le disque formant lest 44 , le dispositif d'identification électronique 49 encapsulé dans son boîtier 50 étant noyé dans le disque formant lest 44, emprisonné dans la matière plastique rigide le constituant. Le boîtier 50 se présente sous la forme d'un cylindre plat de 20 mm de diamètre et d'épaisseur égale à 1 mm.

Dans le mode de réalisation ici décrit à titre non limitatif, le dispositif d'identification électronique 49 encapsulé dans le boîtier 50 comporte un circuit électronique principalement constitué d'une mémoire de type PROM (mémoire morte programmable) contenant un code fixe d'identification numérique ou alphanumérique de 64 bits et d'un ensemble émetteur-récepteur et l'antenne de l'émetteur-récepteur, ce dernier étant susceptible d'échanger des données avec un poste de lecture fixe distant d'environ 15 cm, la fréquence de travail se situant entre 10 kHz et 20 MHz. Le circuit électronique est alimenté par couplage inductif au niveau de l'antenne de l'émetteur-récepteur. Sans sortir du cadre de l'invention le boîtier peut être remplacé pour gagner de la place en épaisseur par une pastille d'époxy enrobant le circuit électronique et l'antenne associée.

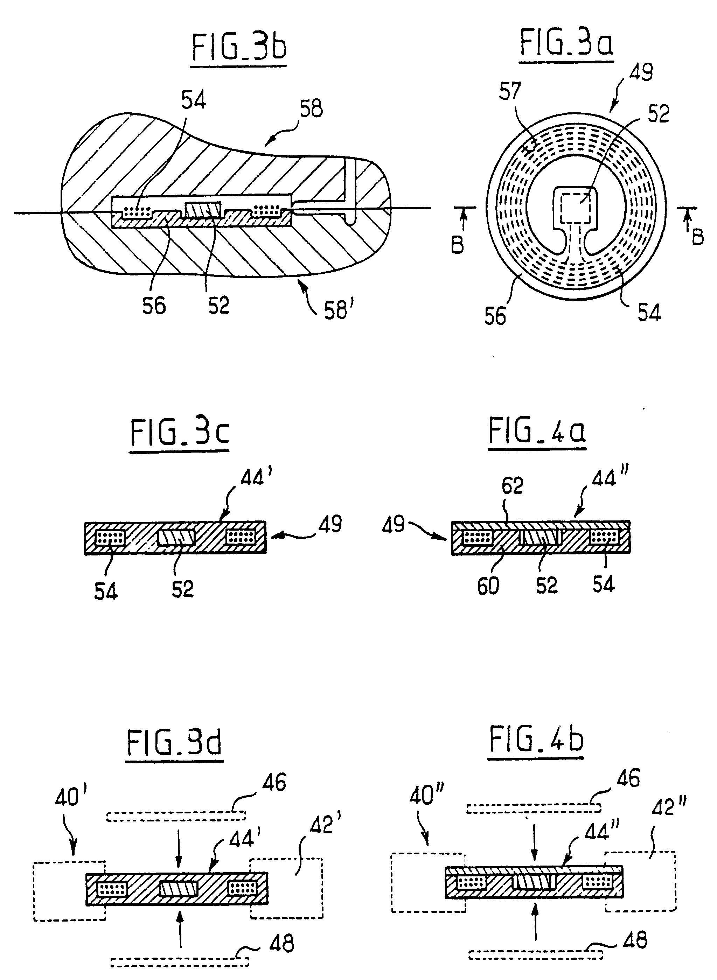

Bien entendu, l'invention n'est pas limitée au dispositif d'identification électronique de type "passif" ici décrit mais couvre également tous les autres circuits électroniques, passifs ou actifs, permettant une identification dans le sens le plus large évoqué ci-avant, et en particulier les circuits à code évolutif, c'est-à-dire des circuits qui en plus de la lecture permettent l'écriture. Cette dernière fonction est très intéressante pour la sécurité et pour le suivi (dans l'espace et/ou dans le temps) de la plaque ou du jeton. De même, l'utilisation de circuits électroniques à hyperfréquences permet d'augmenter la distance de lecture (ce qui confère à ces circuits une fonction de détection intéressante du point de vue de la lutte contre le vol) et les vitesses de lecture/écriture. Ces remarques sont applicables aux circuits électroniques utilisables dans les autres modes de réalisation de l'invention décrits ci-après en référence aux figures 3a à 3d et 4a-4b

Avantageusement le disque 44 est réalisé par injection en matière plastique par exemple polyamide PA-6 ou PA-6.6 chargée de fines particules et/ou billes de métaux non ferreux, de préférence tungstène ou bronze, pour obtenir un poids de lest approprié. A cette fin on place le dispositif d'identification électronique 49 (boîtier 50 comportant son circuit électronique associé) dans le moule d'une presse à injecter, le moule étant conçu pour obtenir un disque cylindrique plat 44 aux formes et aux dimensions bien définies, en particulier pour permettre les opérations de surmoulage ultérieures de la couronne 42. On peut remarquer sur les figures 1 et 2 que pour augmenter la sécurité de l'agencement selon l'invention, l'emprise de la couronne 42 vient recouvrir partiellement le boîtier 50, le surmoulage de la couronne 42 assurant une intégration à demeure de la coque 44 dans le corps du jeton.

Sans sortir du cadre de l'invention, il est possible de remplacer tout du moins pour partie la charge en bronze du disque-lest 44 par une charge en ferrite pour améliorer le performances de transmission du dispositif d'identification électronique, la ferrite étant de plus susceptible de jouer un rôle de charge pondérale.

Il est à noter que la présence du dispositif d'identification électronique est compatible avec d'autres moyens de détection spécifiques utilisés dans la protection contre le vol, en particulier des éléments détectables dans un portillon ou portique de détection et constitués par au moins un film orienté ou un filament en matière active ou en alliage sensible au rayonnement électromagnétique convenablement fixés ou disposés dans le corps du jeton. Par exemple dans le cas du jeton illustré aux figures 1 et 2, les étiquettes 46 et 48 portent chacune en interne une épaisseur de film orienté (non représentée) convenablement fixée à l'aide de deux couches d'adhésif transfert. Lors de la mise en place des étiquettes 46 et 48, il est important de disposer l'orientation des films détectables à 90° (à quelques degrés près) pour améliorer la détection.

Les figures 3a à 3d montrent une variante de réalisation d'un jeton américain dans lequel la coque 44' (formant le disque-lest d'un jeton 40') est obtenue par injection de matière plastique rigide (par exemple une matière choisie parmi celles utilisées pour le disque-lest 44 ci-avant) en surmoulage sur une demi-coque 56 creuse (préalablement obtenue par moulage par injection de la même matière) et portant le dispositif d'identification électronique. Comme on peut le voir sur la figure 3a montrant une vue de dessus et la figure 3b montrant une vue en coupe de la demi-coque 56 selon la ligne B-B de la figure 3a, la demi-coque 56 comporte un évidemment 57 pour servir de logement au circuit électronique 52 et à son antenne périphérique 54 (par exemple du type à spires circulaires non jointives illustré figure 3a) constituant le dispositif d'identification électronique 49. La demi-coque 56 et le dispositif d'identification électronique 49 sont placés dans le moule 58-58' d'une presse à injection comme illustré sur la figure 3b pour obtenir un ensemble monobloc rigide formant coque 44' représenté en coupe à la figure 3c. Le jeton 40' est terminé selon le mode opératoire schématisé à la figure 3d par injection de la couronne 42' en surmoulage sur la coque 44' et la pose des étiquettes 46 et 48.

Les figures 4a et 4b illustrent la phase finale de fabrication d'une autre variante de jeton "américain" dans laquelle la coque 44" (formant le disque-lest du jeton 40") est obtenue par solidarisation d'un couvercle en matière plastique 62 sur un disque creux 60 portant le dispositif d'identification électronique 49, le disque creux 60 (réalisé par moulage par injection) étant pourvu d'un évidement semblable à l'évidement 57 pour recevoir le circuit électronique 52 et l'antenne 54. La solidarisation du couvercle 62 et du disque 60 peut être réalisée par collage ou soudure ou encore directement par le surmoulage de la couronne 42".

A titre de variante de réalisation de l'invention, les évidements de la demi-coque 56 et du disque creux 60 peuvent être modifiés pour recevoir l'identifiant électronique encapsulé dans un boîtier ou enrobé dans une pastille en époxy.

## Revendications

1. Jeton de jeu, ou dispositif de jeu analogue représentatif d'une valeur nominale prédéterminée ou non, comportant un corps plat en matière plastique (40,40',40") pourvu d'une ouverture traversant ledit corps, un disque central formant lest- dans ladite ouverture et porteur d'un dispositif d'identification électronique (49, 52-54) et une couronne annulaire (42,42',42") en matière plastique surmoulée sur le disque central formant ledit corps du jeton (40,40',40"), caractérisé en ce que le disque central est constitué par une coque rigide en matière plastique (44,44',44") à l'intérieur de laquelle est disposé le dispositif d'identification électronique (49, 52-54), la matière plastique utilisée pour la coque (44,44',44") étant chargée en poids par des particules de métaux non ferreux tels que le tungstène ou le bronze et/ou par des particules de ferrite également destinée à améliorer les performances de transmission dudit dispositif d'identification électronique (49).

2. Jeton de jeu ou dispositif de jeu analogue selon la revendication 1 caractérisé en ce que la matière plastique utilisée pour la coque (44,44',44") est chargée en poids par des particules de tungstène.

3. Jeton de jeu ou dispositif de jeu analogue selon l'une des revendications 1 et 2, caractérisé en ce que le dispositif d'identification électronique (49, 52-54) comporte un circuit électronique (52) comportant une mémoire portant des informations concernant le jeton, par exemple un code d'identification, et un émetteur-récepteur à antenne périphérique (54) adapté pour être alimenté par couplage inductif.

4. Jeton de jeu ou dispositif de jeu analogue selon l'une des revendications précédentes caractérisé en ce que ledit dispositif d'identification électronique (49, 52-54) est disposé dans ladite coque rigide (44,44',44") soit directement, soit encapsulé ou enrobé.

5. Jeton de jeu ou dispositif de jeu analogue selon l'une des revendications précédentes caractérisé en ce que ladite coque (44") est obtenue par solidarisation d'un couvercle (62) en matière plastique sur un disque creux (60) en matière plastique portant ledit dispositif d'identification électronique (49, 52-54).

6. Jeton de jeu ou dispositif de jeu analogue selon l'une des revendications 1 à 4 caractérisé en ce que ladite coque (44, 44') est monobloc et obtenue par moulage par injection.

7. Jeton de jeu ou dispositif analogue selon la revendication 6 caractérisé en ce que ladite coque (44) est obtenue par injection autour dudit dispositif d'identification électronique (15) de matière plastique éventuellement chargée.

8. Jeton de jeu ou dispositif analogue selon la revendication 7 caractérisé en ce que ladite coque (44') est obtenue par injection de matière plastique en surmoulage sur une demi-coque creuse (56) en matière plastique portant ledit dispositif d'identification électronique (49).

9. Jeton de jeu ou dispositif analogue selon l'une des revendications précédentes, caractérisé en ce qu'il comporte deux étiquettes (46, 48) en vis-à-vis de chaque face du disque central (44,44',44"), chaque étiquette (46, 48) portant en interne un film orienté détectable en matière active ou en alliage sensible au rayonnement électromagnétique, la disposition des étiquettes (46, 48) étant telle que les films sont orientés sensiblement à 90° après montage sur le jeton.

## Patentansprüche

1. Spielmarke oder analoge Spielvorrichtung, die einen gegebenenfalls vorbestimmten Nennwert darstellt, mit einem flachen Körper (40, 40', 40") aus Kunststoff, in dem eine Durchgangsöffnung ausgebildet ist, einer einen Ballast bildenden mittleren Scheibe in der Öffnung, die eine elektronische Identifizierungsvorrichtung (49, 52-54) trägt, und einem ringförmigen Kranz (42, 42', 42") aus auf der mittleren Scheibe aufgespritztem Kunststoff, der den Körper (40, 40', 40") der Marke bildet, dadurch gekennzeichnet, daß die mittlere Scheibe aus einer starren Schale (44, 44', 44") aus Kunststoff besteht, in der die elektronische Identifizierungsvorrichtung (49, 52-54) angeordnet ist, wobei der für die Schale (44, 44', 44") verwendete Kunststoff durch Teilchen aus Nichteisenmetallen, wie zum Beispiel Wolfram oder Bronze, und/oder durch Ferritteilchen, die des weiteren die Übertragungseigenschaften der elektronischen Identifizierungsvorrichtung (49) verbessern sollen, mit Gewicht belastet wird.

2. Spielmarke oder analoge Spielvorrichtung nach Anspruch 1, dadurch gekennzeichnet, daß der für die Schale (44, 44', 44") verwendete Kunststoff durch Wolframteilchen mit Gewicht belastet wird.

3. Spielmarke oder analoge Spielvorrichtung nach Anspruch 1 oder 2, dadurch gekennzeichnet, daß die elektronische Identifizierungsvorrichtung (49, 52-54) eine elektronische Schaltung (52) umfaßt, die einen Speicher, der die Marke betreffende Informationen, zum Beispiel einen Identifizierungscode, enthält, und einen Sender-Empfänger mit einer Umfangsantenne (54), die zur Versorgung durch induktive Kopplung ausgeführt ist, enthält.

4. Spielmarke oder analoge Spielvorrichtung nach einem der vorhergehenden Ansprüche, dadurch gekennzeichnet, daß die elektronische Identifizierungsvorrichtung (49, 52-54) entweder direkt oder verkapselt oder umhüllt in der starren Schale (44, 44', 44") angeordnet ist.

5. Spielmarke oder analoge Spielvorrichtung nach einem der vorhergehenden Ansprüche, dadurch gekennzeichnet, daß die Schale (44") durch feste Verbindung eines Deckels (62) aus Kunststoff auf einer Hohlscheibe (60) aus Kunststoff, die die elektronische Identifizierungsvorrichtung (49, 52-54) trägt, erhalten wird.

6. Spielmarke oder analoge Spielvorrichtung nach einem der Ansprüche 1 bis 4, dadurch gekennzeichnet, daß die Schale (44, 44') einstückig ausgeführt ist und durch Spritzgießen hergestellt wird.

7. Spielmarke oder analoge Spielvorrichtung nach Anspruch 6, dadurch gekennzeichnet, daß die Schale (44) durch Umspritzen der elektronischen Identifizierungsvorrichtung (15) mit möglicherweise gefülltem Kunststoff erhalten wird.

8. Spielmarke oder analoge Spielvorrichtung nach Anspruch 7, dadurch gekennzeichnet, daß die Schale (44') durch Aufspritzen von Kunststoff auf eine hohle Halbeshcale (56) aus Kunststoff, die die elektronische Identifizierungsvorrichtung (49) enthält, erhalten wird.

9. Spielmarke oder analoge Spielvorrichtung nach einem der vorhergehenden Ansprüche, dadurch gekennzeichnet, daß sie zwei einander gegenüberliegende Etiketten (46, 48) auf jeder Seite der mittleren Scheibe (44, 44', 44") enthält, wobei jedes Etikett (46, 48) innen eine erfaßbare, ausgerichtete Folie aus aktiver Masse oder einer auf elektromagnetische Strahlung reagierenden Legierung enthält und wobei die Etiketten (46, 48) so angeordnet sind, daß die Folien nach dem Anbringen an der Marke im wesentlichen um 90° ausgerichtet sind.

## Claims

1. Gambling chip, or similar gaming device, representing a predetermined or non-predetermined nominal value, comprising a flat plastic body (40, 40', 40'') provided with an opening passing through the said body, a central disc forming ballast in the said opening and carrying an electronic identification device (49, 52-54) and a plastic annular ring (42, 42', 42'') overmoulded on the central disc forming the said body of the chip (40, 40', 40''), characterized in that the central disc consists of a rigid plastic shell (44, 44', 44'') inside which the electronic identification device (49, 52-54) is placed, the plastic used for the shell (44, 44', 44'') being filled, weightwise, with particles of non-ferrous metal such as tungsten or bronze and/or with particles of ferrite, the ferrite also being intended to improve the transmission performance of the said electronic identification device (49).

2. Gambling chip or similar gaming device according to Claim 1, characterized in that the plastic used for the shell (44, 44', 44") is filled, weightwise, with tungsten particles.

3. Gambling chip or similar gaming device according to either of Claims 1 and 2, characterized in that the electronic identification device (49, 52-54) includes an electronic circuit (52) having a memory carrying information regarding the chip, for example an identification code, and an emitter-receiver with a peripheral antenna (54) suitable for being supplied by inductive coupling.

4. Gambling chip or similar gaming device according to one of the preceding claims, characterized in that the said electronic identification device (49, 52-54) is placed in the said rigid body (44, 44', 44'') either directly, or encapsulated or embedded.

5. Gambling chip or similar gaming device according to one of the preceding claims, characterized in that the said shell (44'') is obtained by firmly attaching a plastic cover (62) to a hollow plastic disc (60) carrying the said electronic identification device (49, 52-54).

6. Gambling chip or similar gaming device according to one of Claims 1 to 4, characterized in that the said shell (44, 44') is made in one piece and obtained by injection moulding.

7. Gambling chip or similar device according to Claim 6, characterized in that the said shell (44) is obtained by injection of optionally filled plastic around the said electronic identification device (15).

8. Gambling chip or similar device according to Claim 7, characterized in that the said shell (44') is obtained by overmoulding injection of plastic over a hollow plastic half-shell (56) carrying the said electronic identification device (49).

9. Gambling chip or similar device according to one of the preceding claims, characterized in that it includes two labels (46, 48) opposite each other on each face of the central disc (44, 44', 44'') each label (46, 48) carrying, internally, a detectable oriented film made of an active material or of an alloy sensitive to electromagnetic radiation, the arrangement of the said labels (46, 48) being such that the films are oriented at approximately 90° to each other after mounting them on the chip.
